# EUROPÄISCHE PATENTSCHRIFT

(11) **EP 3 972 886 B1**
(45) Veröffentlichungstag und Bekanntmachung des Hinweises auf die Patenterteilung: **24.01.2024**
(21) Anmeldenummer: 20727221.2
(22) Anmeldetag: 18.05.2020
(51) Int. Cl.: B62D 1/185, F16C 29/04

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 22.05.2019 DE 102019207525
(43) Veröffentlichungstag der Anmeldung: 30.03.2022
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); BLÄTTLER, Simon, 9472 Grabs (CH); KREUTZ, Daniel, 6800 Feldkirch (AT)
(74) Vertreter: thyssenkrupp Intellectual Property GmbH
(86) Internationale Anmeldenummer: PCT/EP2020/063785
(87) Internationale Veröffentlichungsnummer: WO 2020/234224

(56) Entgegenhaltungen:
- DE-A1- 3 513 340
- US-A- 4 805 478
- US-A- 5 737 971

## Beschreibung

### Stand der Technik

Die Erfindung betrifft eine Lenksäule für ein Kraftfahrzeug, umfassend eine Manteleinheit, in der eine Lenkspindel um eine in Längsrichtung verlaufende Längsachse drehbar gelagert ist und die mindestens zwei in Längsrichtung relativ zueinander verstellbar geführte Mantelrohre mit mehreckigem Querschnitt aufweist, wobei zwischen den Mantelrohren einen Wälzkörperradius aufweisende Wälzkörper in Laufbahnen einer Wälzkörperführung in Längsrichtung abrollbar angeordnet sind, wobei mindestens drei Laufbahnen über den Umfang verteilt angeordnet sind.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in der Manteleinheit einer Stelleinheit drehbar gelagert, die an der Fahrzeugkarosserie über eine Trageinheit gelagert ist, welche die Manteleinheit hält. Verstellbare Lenksäulen ermöglichen die Verstellung der Stelleinheit relativ zur Fahrzeugkarosserie.

Es ist bekannt, die Lenksäule in Längsrichtung, d.h. in Achsrichtung der Lenkspindel, verstellbar zu gestalten, um im manuellen Fahrbetrieb das Lenkrad in Bedienposition für einen bequemen Lenkeingriff an die Fahrerposition anzupassen. Zum autonomen Fahren, wenn kein manueller Lenkeingriff erfolgt, kann die Lenksäule einen möglichst großen Verstellweg in Längsrichtung haben, so dass durch maximales Zusammenschieben in Längsrichtung das Lenkrad in eine Verstauposition außerhalb der Bedienposition gebracht werden kann, um den Fahrzeuginnenraum für eine anderweitige Nutzung freizugeben.

Zur Verstellung in Längsrichtung weist die Manteleinheit eine teleskopartige Anordnung von Mantelrohren auf. Es sind Einfach-Teleskopanordnungen bekannt, bei denen ein Innenmantelrohr in ein Außenmantelrohr eintaucht. Insbesondere zur Realisierung großer Verstellverhältnisse sind Mehrfach-Teleskopanordnungen bekannt, bei denen dazwischen ein oder mehr Zwischenmantelrohre eingefügt sind. Um eine leichtgängige und spielarme Verstellbarkeit zu erreichen, und dabei dennoch eine möglichst hohe Biegesteifigkeit der Manteleinheit darstellen zu können, ist es bekannt, eine lineare Wälzlagerung zwischen den Mantelrohrenvorzusehen. Aus der US 5,737,971 ist beispielsweise eine gattungsgemäße Lenksäule bekannt, bei der die Manteleinheit insgesamt vier paarweise bezüglich der Längsachse gegenüberliegende Wälzkörperführungen aufweist. Für jede der Wälzkörperführungen ist jeweils eine rinnen- oder nutförmige Laufbahn außen an einem inneren Mantelrohr, und dieser radial gegenüberliegend innen an einem äußeren Mantelrohr angeordnet. In dem zwischen den Laufbahnen begrenzten Laufbahnquerschnitt sind als Wälzkörper in Reihen jeweils mehrere Kugeln angeordnet, die sich bei einer relativen Verstellung der Mantelrohre in Längsrichtung auf den Laufbahnen abwälzen können. Dadurch, dass der Abrollquerschnitt, der den Wälzkörperquerschnitt in Abrollrichtung quer zur Längsachse bezeichnet, mit geringen Toleranzen an den Laufbahnquerschnitt angepasst wird, kann eine leichtgängige und spielarme Verstellung realisiert werden.

Die Laufbahnen sind auf den Verbindungsseiten, dies sind die Seitenflächen der im Querschnitt rechteckigen Mantelrohre, angeordnet. Die mehreckigen Mantelrohre haben zwar in sich eine relativ hohe Steifigkeit. Dadurch, dass die Wälzkörperführungen auf den Seitenflächen, welche die Verbindungsseiten bilden, angeordnet sind, kann für die gesamte Manteleinheit für einen gegebenen Querschnitt der Mantelrohre jedoch nur eine begrenzte Steifigkeit realisiert werden. Außerdem ist der Bauraumbedarf relativ groß.

Weiterhin ist es bei der bekannten Manteleinheit erforderlich, das Lagerspiel der Wälzkörper zu den Laufbahnen mit geringen Toleranzen nahe null relativ genau vorzugeben, da ein gro-βes Lagerspiel die Steifigkeit verringert, aber ein zu geringes Lagerspiel die Verstellkraft erhöht, was zu einer nicht akzeptablen schwergängigen Verstellung führt. Die engen einzuhaltenden Toleranzen führen bei der bekannten Lenksäule zu einem hohen Fertigungs- und Montageaufwand.

Darüber hinaus beschreibt die DE 35 13 340 ein Verfahren zur Herstellung einer axial verstellbaren Lenkspindel.

Angesichts der vorangehend erläuterten Problematik ist es eine Aufgabe der vorliegenden Erfindung, eine verbesserte wälzgelagerte Manteleinheit mit höherer Steifigkeit und kompakter Bauweise zur Verfügung zu stellen. Weiterhin wird eine verbesserte Funktion mit geringerem Fertigungsaufwand angestrebt.

### Darstellung der Erfindung

Diese Aufgabe wird erfindungsgemäß gelöst durch eine Lenksäule mit den Merkmalen des Anspruchs 1, sowie durch ein Verfahren zur Herstellung einer Lenksäule gemäß Anspruch 12. Vorteilhafte Weiterbildungen ergeben sich aus den Unteransprüchen.

Bei einer Lenksäule für ein Kraftfahrzeug, umfassend eine Manteleinheit, in der eine Lenkspindel um eine in Längsrichtung verlaufende Längsachse drehbar gelagert ist und die mindestens zwei in Längsrichtung relativ zueinander verstellbar geführte Mantelrohre mit mehreckigem Querschnitt aufweist, wobei zwischen den Mantelrohren einen Wälzkörperradius aufweisende Wälzkörper in Laufbahnen einer Wälzkörperführung in Längsrichtung abrollbar angeordnet sind, wobei mindestens drei Laufbahnen über den Umfang verteilt angeordnet sind, wird erfindungsgemäß vorgeschlagen, dass die Mittelpunkte der radial außen auf einem Mantelrohr abrollbaren Wälzkörper einen radialen Abstand kleiner oder gleich dem Wälzkörperradius zu einem Hüllkreis haben, der das Mantelrohr, auf dem die Wälzkörper au-βen abrollbar sind, umschreibt.

Bevorzugt ist der Wälzkörper als Kugel oder als Zylinderrolle ausgebildet.

Ein mehreckiger Querschnitt weist eine mehrkantige oder mehrschenklige Grundform auf, wobei diese von einer kreiszylindrischen Form abweicht. Es ist dabei nicht erforderlich, dass sich die Ecken durch nicht differenzierbare Stellen bildet, sondern diese können auch abgerundet sein. Auch stark verrundete Querschnittsprofile, wie ein kleeblättriges Profil, weisen einen mehreckigen Querschnitt auf.

Durch die Erfindung wird eine optimierte Ausgestaltung und Anordnung der Wälzkörperführungen bei mehrkantigen Mantelrohren angegeben, die einen bevorzugt drei, vier-, sechs- oder achteckigen Querschnitt haben. Dabei wird ein optimiertes Verhältnis des Wälzkörperradius, welcher dem halben Wälzkörperdurchmesser entspricht und den Abrollradius angibt, zum Durchmesser des Hüllkreises eines Mantelrohrs angegeben, welches auf seiner Außenseite Laufbahnen aufweist.

Der Hüllkreis des Mantelrohrs bezeichnet den Kreis mit dem kleinsten möglichen Radius, dem Hüllkreisradius, der den mehreckigen Außenquerschnitt des Mantelrohrs umschließt, wobei die Ecken den Hüllkreis an mindestens drei Punkten berühren. Bevorzugt ist der Querschnitt symmetrisch zur Längsachse orientiert, so dass der Hüllkreis bevorzugt konzentrisch zur Längsachse liegen kann.

Erfindungsgemäß sind die Wälzkörper mit ihren Mittelpunkten innerhalb eines im Querschnitt kreisringförmigen Optimalbereichs angeordnet, dessen Innenradius der Differenz von Hüllkreisradius und Wälzköperradius entspricht, und dessen Außenradius durch die Summe von Hüllkreisradius und Wälzkörperradius gegeben ist.

Dadurch, dass der Hüllkreis für einen gegebenen Querschnitt eines Mantelrohrs eindeutig definiert ist, können abhängig vom Wälzkörperradius die Wälzkörperführungen mit höherer Steifigkeit ausgebildet werden, wobei durch die kompakte Bauform eine bessere Nutzung des zur Verfügung stehenden, in der Regel knappen Bauraums im Kraftfahrzeug ermöglicht wird.

Bevorzugt können die Mittelpunkte außerhalb des Hüllkreises liegen. Dadurch wird ein grö-βerer freier Laufbahnquerschnitt radial zwischen den Laufbahnen ermöglicht. Es kann ein größerer Querschnitt des Mantelrohrs gewählt werden, und dadurch, dass die Wälzkörper weiter von der Längsachse entfernt sind und die Wälzkörperführungen einen größeren radialen Abstand voneinander haben können, kann eine höhere Biegesteifigkeit der Wälzkörperführung realisiert werden.

Vorzugsweise kann vorgesehen sein, dass der mehreckige Querschnitt relativ zueinander abgewinkelte Verbindungsseiten aufweist, wobei eine Laufbahn zwischen zwei Verbindungsseiten angeordnet ist, vorzugsweise sämtliche Laufbahnen jeweils zwisch en zwei benachbarten Verbindungsseiten angeordnet sind. Das Mantelrohr hat außen eine in Längsrichtung langgestreckte mehrkantige Grundform, beispielsweise eine Drei-, Vier-, Sechs- oder Achtkant-Prismenform, bei der die Verbindungsseiten, die durch die Seitenflächen gebildet werden, parallel zu Sekanten des Hüllkreises ausgerichtet sind. Die Verbindungsseiten liegen jeweils in Seitenebenen, die sich in einem Kantenbereich schneiden, der sich im Querschnitt jeweils im Bereich einer Ecke befindet. Eine Laufbahn ist erfindungsgemäß bevorzugt in diesem Eck- bzw. Kantenbereich zwischen zwei Verbindungsseiten angeordnet. Dadurch kann eine hohe Verformungssteifigkeit der Laufbahnen erzeugt werden, die bei gleicher Wandungsstärke des Mantelrohrs höher sein kann als bei innerhalb der Verbindungsseiten angeordneten Wälzlagerführungen. Durch die Anordnung in den Kantenbereichen kann weiterhin eine Bauraumoptimierung erfolgen.

Bei der vorgenannten Ausführungsform ist es möglich, dass mindestens eine Laufbahn auf einer Laufbahnseite angeordnet ist, die abgewinkelt zwischen Verbindungsseiten angeordnet ist. Eine Laufbahnfläche kann ähnlich einer Fase angeordnet sein, und erstreckt sich parallel zur Längsachse in einer Laufbahnebene, die zu den benachbarten Verbindungsseiten geneigt ist. Die Laufbahnseite kann zumindest abschnittweise einen radialen Abstand zum Hüllkreis haben, und ist beispielsweise relativ dazu radial nach innen versetzt. Dadurch ist es möglich, die Wälzkörper optimiert im Kantenbereich der an die Laufbahnseite angrenzenden Verbindungsseiten zu positionieren, um eine möglichst hohe Steifigkeit zu erzeugen.

Bevorzugt können die Verbindungsseiten und/oder die Laufbahnseiten im Wesentlichen eben ausgebildet sein. Dabei können die Verbindungs- und/oder Laufbahnseiten die äußeren Seitenflächen eines mehrkantigen Mantelrohrs bilden, die jeweils in Verbindungs- bzw-Laufbahnebenen liegen, die parallel zu Sekanten des Hüllkreises ausgerichtet. Die Verbindungs- und Laufbahnseiten können regelmäßig oder unregelmäßig, symmetrisch oder unsymmetrisch angeordnet sein. Es kann vorteilhaft sein, dass sich jeweils zwei Verbindungsseiten bzw. Laufbahnseiten bezüglich der Längsachsehe parallel gegenüberliegen.

Es kann bevorzugt vorgesehen sein, dass die Mittelpunkte von in benachbarten Laufbahnen angeordneten Wälzkörpern senkrecht zur Längsachse einen Querabstand von mindestens dem vierfachen Wälzkörperradius haben. Dieser Querabstand, der mindestens dem doppelten Wälzkörperdurchmesser entspricht, sorgt in vorteilhafter Weise für eine über den Umfang verteilte, und damit vergleichmäßigte Abstützung von auf die Manteleinheit einwirkenden Querkräften.

Es ist vorteilhaft, dass eine Mehrzahl von Wälzkörpern um ihren Mittelpunkt drehbar in einem Wälzkörperkäfig gehalten ist. Als Wälzkörper können beispielsweise Kugeln oder Rollen eingesetzt werden, wobei jeweils mehrere Wälzkörper mit Abstand in Längsrichtung in einer Laufbahn angeordnet sind. Ein Wälzkörperkäfig kann als Kugel- oder Rollenkäfig ausgebildet sein und dient zur Halterung und Führung von mehreren Wälzkörpern, die in entsprechend ausgestalteten Aufnahmen um ihre Abroll- oder Wälzachse frei drehbar aufgenommen sind. In der Manteleinheit ist er koaxial in dem Zwischenraum zwischen zwei Mantelrohren angeordnet, so dass die Wälzkörper im Laufbahnquerschnitt positioniert sind. Eine Mehrzahl von Wälzkörpern kann auf diese Art jeweils in Reihen angeordnet sein, wobei bevorzugt mehrere Reihen entsprechend der Anordnung der Laufbahnen über den Umfang verteilt angeordnet sind. Ein Wälzkörperkäfig kann rohrfömig-geschlossen ausgebildet und koaxial zur Längsachse zwischen den Mantelrohren eingesetzt sein, oder in Umfangsrichtung separate Segmente aufweisen.

Eine vorteilhafte Ausführung der Erfindung ist, dass die Manteleinheit mindestens drei Mantelrohre aufweist, die mindestens ein Außen-, Zwischen- und Innenmantelrohr umfassen, mit mindestens einem in dem Außenmantelrohr angeordneten Zwischenmantelrohr, in dem das Innenmantelrohr oder ein weiteres Zwischenmantelrohr angeordnet ist, wobei auf mindestens einem Zwischenmantelrohr und dem Innenmantelrohr Wälzkörper außen abrollbar sind. Bei einem derartigen Mehrfachteleskop sind zwischen einem Außenmantelrohr und einem Innenmantelrohr ein oder mehrere Zwischenmantelrohre teleskopierbar eingesetzt. Dadurch kann ein besonders großes Verstellverhältnis zwischen der maximal zusammengeschobenen und der maximal auseinander gefahrenen Verstellposition realisiert werden, wie dies beispielsweise bei verstaubaren Lenksäulen für autonomen Fahrbetrieb vorteilhaft ist. Das Innenmantelrohr und das oder die Zwischenmantelrohre weisen jeweils auf ihrer Außenseite äußere Laufbahnen auf, die zur Begrenzung des Laufbahnquerschnitts korrespondierenden innen in dem Außenmantelrohr, oder auch in einem weiteren Zwischenmantelrohr angeordneten Laufbahnen radial gegenüberliegen. Entsprechend können bevorzugt das Innenmantelrohr und das oder die Zwischenmantelrohre erfindungsgemäß ausgestaltet sein. Die dadurch erreichte erhöhte Steifigkeit der Wälzkörperlagerungen ist insbesondere bei einem Mehrfach-Teleskop besonders vorteilhaft, da die Steifigkeit der Manteleinheit durch die Steifigkeit der Mehrzahl der Wälzkörperlagerungen maßgeblich beeinflusst wird. Dabei kann eine kompakte Bauform realisiert werden, insbesondere durch die oben beschriebene Anordnung der Wälzkörper im Bereich der Kanten.

In der vorgenannten Ausführung kann bevorzugt vorgesehen sein, dass ein auf einem ersten Mantelrohr angeordneter erster Wälzkörper von einem auf einem zweiten Mantelrohr angeordneten zweiten Wälzkörper einen Mittenabstand hat, der kleiner oder gleich einem vierfachen Wälzkörperradius des größten Wälzkörpers ist. Dadurch, dass der Mitten- bzw. Mittelpunktabstand zwischen den Wälzkörpern einer inneren und einer relativ dazu äußeren Wälzlagerung, die bezüglich eines Zwischenmantelrohrs innen und außen angeordnet sind, kleiner oder gleich dem doppelten Wälzkörperdurchmesser sind, kann eine besonders steife Abstützung gegeneinander erzeugt werden. Dadurch kann die Steifigkeit der Manteleinheit erhöht werden.

Eine Laufbahn kann als rinnenförmige Einformung ausgebildet sein. Der rinnen- oder nutförmig in radialer Richtung vertiefte Querschnitt einer Laufbahn kann bevorzugt an die Form und Abmessung der Wälzkörper angepasst werden, um eine definierte Abwälzung der Wälzkörper in dem konkav offenen Querschnitt zu erzeugen. Ein Mantelrohr kann aus einem Rohrprofil gebildet werden, in das die Laufbahnen durch Kaltverformung eingebracht werden, beispielsweise durch Walzen oder Pressen.

Die Mantelrohre können bevorzugt aus Stahl oder aus einer Aluminiumlegierung gefertigt sein, und die Wälzkörper aus Wälzkörperstahl wie beispielsweise 100Cr6 gemäß DIN EN ISO 683-17.

Für eine möglichst hohe Steifigkeit ist es erforderlich, dass die Wälzkörper zu den Laufbahnen ein möglichst geringes Lagerspiel (Lagerluft) haben, und nahezu spielfrei laufen. Besonders bevorzugt ist das Lagerspiel null, so dass die Wälzkörper spielfrei laufen. Dabei muss jedoch gewährleistet sein, dass die Wälzkörper leichtgängig und gleichmäßig über den gesamten Verstellbereich abrollen können, und keine zu hohe Verstellkraft auftritt, was durch ein - auch abschnittweise - zu geringes Lagerspiel verursacht werden kann. Dabei ist gefordert, dass ein vorgegebener Verstellkraft-Referenzwert innerhalb akzeptabler Toleranzen über die gesamte Fertigung einer Serie eingehalten wird und auch die Schwankungen über den Verstellbereich gering sind. Im Stand der Technik müssen daher die Mantelrohre und insbesondere die Laufbahnen mit engen Toleranzen maßhaltig gefertigt werden, was zu einem entsprechend hohen Aufwand führt, oder es müssen die Mantelrohre vor der Montage vermessen werden und entsprechend mit Wälzkörpern der dazu passenden geometrischen Größe bei der Montage bestückt werden. Hier werden beispielsweise verschiedene Klassen von Wälzkörpern vorgesehen, die jeweils zueinander einen Durchmesserunterschied von 5µm aufweisen. Dies erhöht die Taktzeit und Taktzahl bei der Montage und ist mit hohen Lager- und Logistikkosten verbunden.

Die vorgenannte Problematik tritt bei Lenksäulen mit wälzgelagerter Manteleinheit auf, wobei eine optimierte, spielarme und gleichzeitig leichtgängige Wälzlagerung bei einer Lenksäule der vorangehend beschriebenen Bauweise besonders bedeutsam ist, um die Vorteile der erfindungsgemäß hohen Steifigkeit optimal nutzen zu können.

Zur Lösung der vorgenannten Problematik umfasst die Erfindung weiterhin ein Verfahren zur Herstellung einer Lenksäule, umfassend eine Manteleinheit, in der eine Lenkspindel um eine in Längsrichtung verlaufende Längsachse drehbar gelagert ist und die mindestens zwei in Längsrichtung um einen vorgegebenen Verstellweg relativ zueinander verstellbar geführte Mantelrohre aufweist, welche ein inneres Mantelrohr und ein äußeres Mantelrohr umfassen, die radial einander gegenüberliegende Laufbahnen aufweisen, zwischen denen einen vorgegebenen Abrollquerschnitt aufweisende Wälzkörper in Längsrichtung abrollbar angeordnet sind, bei dem die zur relativen Verstellung der Mantelrohre aufzuwendende Verstellkraft auf einen vorgegebenen Verstellkraft-Referenzwert eingestellt wird, umfassend die Schritte:
A) Bereitstellen eines inneren Mantelrohrs, das eine äußere Laufbahn aufweist, und eines äußeren Mantelrohrs, das eine innere Laufbahn aufweist, wobei die innere Laufbahn und die äußere Laufbahn quer zur Längsachse einen Laufbahnquerschnitt begrenzen,
B) Bereitstellen von Wälzkörpern, deren Abrollquerschnitt größer ist als der Laufbahnquerschnitt,
C) Anordnen der Wälzkörper im Laufbahnquerschnitt,
D) Aufbringen einer axialen Verstellkraft zum relativen Bewegen der Mantelrohre in Längsrichtung über den gesamten Verstellweg, wobei die Wälzkörper die Laufbahnen plastisch verformen, wobei die dabei ausgeübte Verstellkraft entlang des Verstellwegs gemessen wird,
E) Vergleichen der gemessenen Verstellkraft mit einem Verstellkraft-Referenzwert,
F1) Falls die gemessene Verstellkraft über den gesamten Verstellweg innerhalb vorgegebener Toleranzgrenzen mit dem Verstellkraft-Referenzwert übereinstimmt: Ende des Verfahrens.
F2) Falls die gemessene Verstellkraft größer ist als der Verstellkraft-Referenzwert: weiter mit Schritt D).

Es kann vorgesehen sein, dass im Schritt D zusätzlich eine Querkraft und/oder ein Drehmoment in die Mantelrohre eingebracht wird. Die Richtung der Querkraft ist orthogonal zur Längsrichtung. Dadurch kann das erfindungsgemäße Verfahren weiter verbessert zu werden.

Das erfindungsgemäße Verfahren ermöglicht die Kalibrierung der Wälzkörperlagerung auf einen vorgegebenen Verstellkraft-Referenzwert. Besonders vorteilhaft ist dabei, dass die Anforderungen an die Maßhaltigkeit der anfänglich zur Montage bereitgestellten Mantelrohre geringer ist als für die Spielfreiheit der Wälzkörperführungen erforderlich ist.

Eine Besonderheit des erfindungsgemäßen Verfahrens ist, dass die Wälzkörper über ihre prinzipielle Lagerfunktion hinaus als Fertigungsmittel, konkret als Walzen in einem Kaltwalzverfahren zur plastischen Formung der Laufbahnen genutzt werden. Dank des erfindungsgemäßen Verfahrens sind die Laufbahnen nach der Durchführung des Verfahrens optimal an die Wälzkörper angepasst.

Gemäß A) und B) werden zunächst Mantelrohre vorgefertigt, nämlich ein inneres und ein relativ dazu äußeres Mantelrohr, welches entweder ein Außenmantelrohr oder auch ein Zwischenmantelrohr einer Teleskopanordnung sein kann. Die Laufbahnen können dabei toleranzbehaftet einen Laufbahnquerschnitt begrenzen.

Die Wälzkörper, beispielsweise Kugellager-Kugeln, können als industrielle Standard-Bauelemente mit hoher Maßhaltigkeit in der vorgegebenen Abmessung bereitgestellt werden.

Die Wälzkörper haben einen Abrollquerschnitt, der den Wälzkörperquerschnitt in Abrollrichtung quer zur Längsachse bezeichnet. Kugeln haben entsprechend einen kreisrunden Abrollquerschnitt mit dem Kugeldurchmesser.

Für Schritte C) und D) werden die Mantelrohre zunächst koaxial zur Längsachse mit axialem Abstand zueinander angeordnet, und relativ zur Längsachse orientiert, so dass miteinander korrespondierende innere und äußere Laufbahnen einander radial gegenüberliegen. Die Wälzkörper werden axial zwischen den Mantelrohren im Bereich der Laufbahnquerschnitte angeordnet. Durch Aufbringen einer axialen Verstellkraft werden die Mantelrohre in Längsrichtung aufeinander zu bewegt, bis das innere Mantelrohr vollständig bis zum Ende des Verstellwegs in das äußere Mantelrohr eintaucht, wobei die Wälzkörper reibschlüssig zwischen den Mantelrohren mitgenommen werden.

Dadurch, dass die Wälzkörper Übermaß zum Laufbahnquerschnitt haben, bewirken sie insbesondere beim erstmaligen Abwälzen beim Eintauchen des inneren in das äußere Mantelrohr eine plastische Verformung der Laufbahnen. Dadurch wird der Laufbahnquerschnitt aufgeweitet. Bevorzugt kann ein Schmierstoff, beispielsweise in Form eines Fetts, zwischen Wälzkörper und Laufbahn zur Reduktion der Reibung und zum Verhindern des Fressens zwischen Wälzkörper und der jeweiligen Laufbahn vorgesehen sein.

Während des Abwälzens wird die Verstellkraft gemessen, die aufgewendet werden muss, um die Mantelrohre relativ zueinander zu bewegen. Diese Verstellkraft ist beim erstmaligen Abwälzen zur plastischen Verformung der Laufbahnen aufgrund der dabei zu leistenden Verformungsarbeit deutlich höher, als bei darauf folgenden Verstellbewegungen entlang der verformten Laufbahnen.

Beim erstmaligen Abwälzen dienen die Wälzkörper als Walzen zu Kaltumformung der Laufbahnen. Dies ist problemlos möglich, da die Kugeln oder Rollen aus Wälzkörperstahl deutlich härter sind als das Material der Mantelrohre, in der Regel unvergüteter Stahl. Kommerziell erhältliche Kugeln und Rollen haben dabei eine hohe Oberflächengüte und eine geringe Rauigkeit, so dass die Oberflächen der Laufbahnen mit entsprechend hoher Oberflächengüte kalt geformt werden. Ein weiterer positiver Effekt ist, dass durch das Walzen durch die Wälzkörper eine Gefügeverfestigung im Bereich der Abwälzflächen der Laufbahnen bewirkt wird, auf denen die Wälzkörper später beim Verstellen abrollen. Es wird eine Kaltvergütung der Laufbahnen erzeugt.

Während die Mantelrohre relativ zueinander bewegt werden, wird die Verstellkraft über den gesamten Verstellweg gemessen und mit einem vorgegebenen Verstellkraft-Referenzwert verglichen. Der Verstellkraft-Referenzwert entspricht der Verstellkraft, die manuell oder von einem motorischen Verstellantrieb zur Einstellung der Lenksäule im Fahrbetrieb aufgebracht werden muss. Wenn die Wälzkörper Übermaß zum Laufbahnquerschnitt haben, und dadurch eine Kaltverformung bewirken, ist die zur Bewegung aufzuwendende Verstellkraft durch die dabei zu leistende Verformungsarbeit höher, als bei einer spielfreien Passung, bei der die Wälzkörper nur auf den Laufbahnen abrollen.

Unter dem gesamten Verstellweg ist zumindest 90% des maximal möglichen Verstellwegs zu verstehen.

Solange gemäß Schritt F2) die gemessene Verstellkraft größer ist als der Verstellkraft-Referenzwert, wird Schritt D) wiederholt. In Schritt D) kann bevorzugt jeweils eine relative Bewegung der Mantelrohre in einer Vorwärtsrichtung und anschließend in einer dazu entgegengesetzten Rückwärtsrichtung jeweils über den gesamten Verstellweg erfolgen. In Vorwärtsrichtung taucht das innere in das äußere Mantelrohr ein, so dass ein Zusammenschieben erfolgt, und in Rückwärtsrichtung erfolgt ein Auseinanderziehen. Bevorzugt kann jeweils ein Doppelhub umfassend jeweils eine Bewegung in Vorwärts- und Rückwärtsrichtung über den gesamten Verstellweg durchgeführt werden.

Sobald gemäß Schritt F1) erfasst wird, dass die gemessene Verstellkraft über den gesamten Verstellweg innerhalb vorgegebener Toleranzgrenzen mit dem Verstellkraft-Referenzwert übereinstimmt, ist die Manteleinheit fertig kalibriert und das Verfahren kann beendet werden.

Zur Anwendung auf Mehrfach-Teleskopanordnungen können entsprechend sämtliche Mantelrohre unter Einbringung der Wälzkörper in Längsrichtung zusammenbewegt werden, wobei entsprechend sämtliche Laufbahnen zwischen Innen-, Zwischen- und Außenmantelrohren kalt verformt werden.

Es kann vorteilhaft sein, dass die in Vorwärtrichtung gemessene Verstellkraft mit der in Rückwärtsrichtung gemessenen Verstellkraft verglichen wird, und Schritt D) so oft wiederholt wird, bis die gemessenen Verstellkräfte in Vorwärts- und Rückwärtsrichtung innerhalb vorgegebener Toleranzgrenzen übereinstimmen. Dadurch wird sichergestellt, dass potentiell beim Kaltverformen auftretende elastische Rückverformungen ausgeglichen werden.

Falls auch nach einer vorgegebenen Anzahl von Bewegungen die gemessene Verstellkraft außerhalb des Verstellkraft-Referenzwerts liegt, kann eine Fehlermeldung ausgegeben werden, und das Verfahren abgebrochen werden. Wenn auch nach mehrfachem Durchlaufen der vorangehend beschriebenen Kalibrierbewegungen keine Übereinstimmung mit dem Verstellkraft-Referenzwert erreichbar ist, kann eine zu große Maßabweichung vorliegen, die durch das erfindungsgemäße Verfahren nicht ausgeglichen werden kann, oder es liegt ein Material- oder Fertigungsfehler vor. Durch Überwachung der Verstellkraft kann somit mit geringem Aufwand eine Fertigungs- und Qualitätsüberwachung realisiert werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer schematischen teilweisen Innenansicht,,
- Figur 3: einen Querschnitt durch die Lenksäule gemäß Figur 1,
- Figur 4: einen Querschnitt durch die Lenksäule gemäß Figur 1,
- Figur 5: einen Querschnitt durch eine Lenksäule in einer weiteren Ausführungsform,
- Figur 6: einen Längsschnitt (entlang der Längsachse) durch die Lenksäule gemäß Figur 1.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

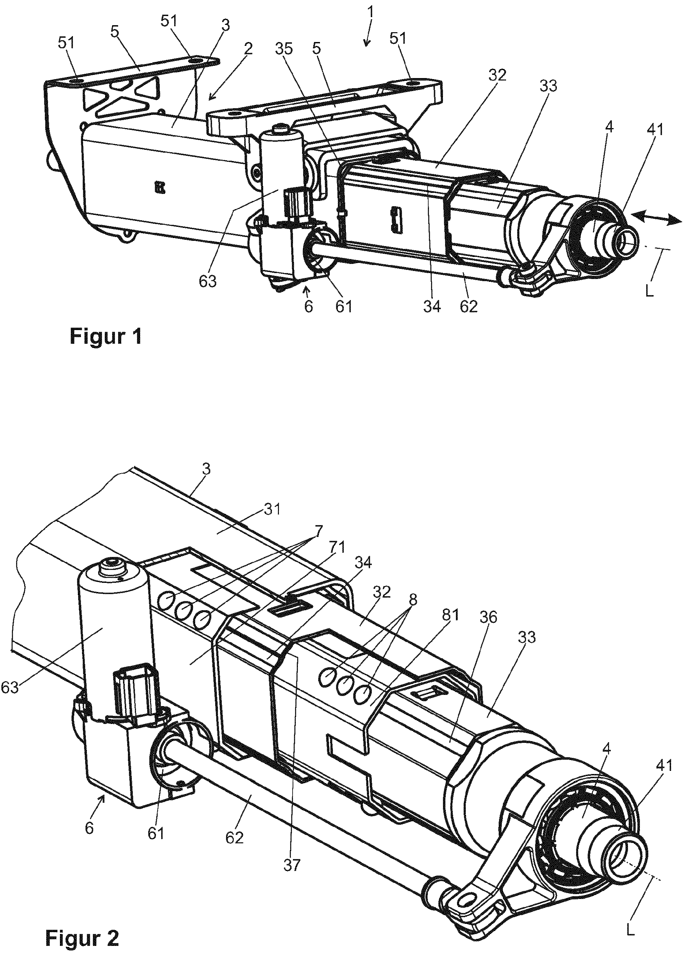

Figur 1 zeigt eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein Zwischenmantelrohr 32 und ein Innenmantelrohr 33 aufweist. Die Mantelrohre 31, 32 und 33 sind in Richtung einer Längsachse L teleskopierend verschiebbar, koaxial ineinander angeordnet, wie mit einem Doppelpfeil angedeutet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Ein Verstellantrieb 6 weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich in Längsrichtung, die der Achsrichtung der Längsachse L entspricht, an dem Außenmantelrohr 31 ab. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Achsrichtung in das Außenmantelrohr 31 eingefahren oder ausgefahren wird, wie mit dem Doppelpfeil angedeutet. Dadurch wird eine Längsverstellung realisiert, durch die ein an dem Anschlussabschnitt 41 angebrachtes Lenkrad nach vorn in eine Verstauposition gebracht werden kann, in der das Innenmantelrohr 33 und das Zwischenmantelrohr 32 in dem Außenmantelrohr 31 eingefahren, d.h. nach vorn versenkt sind.

Alternativ kann sich die Spindelmutter 61 an dem Innenmantelrohr 33, und die Gewindespindel 62 an dem Außenmantelrohr 31 abstützen.

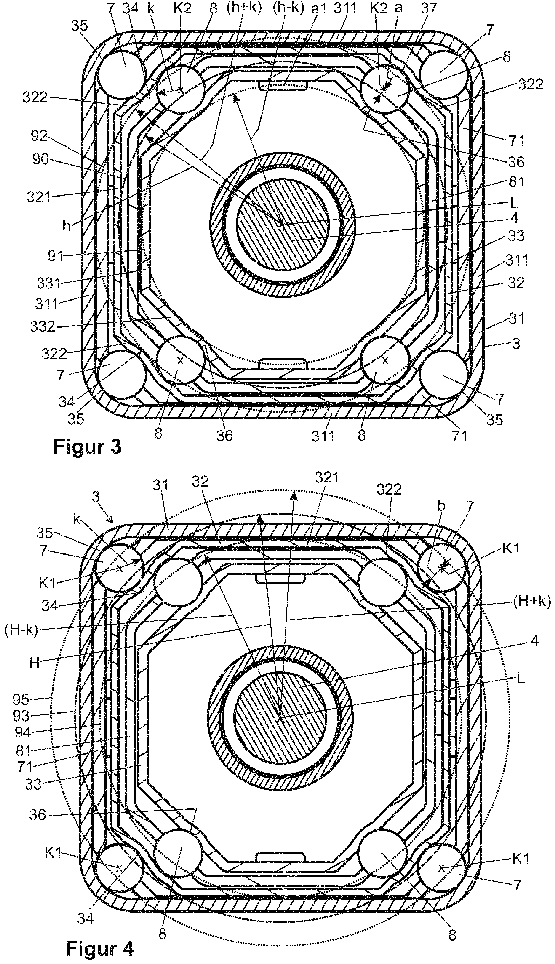

In Figur 2 sind das Außenmantelrohr 31 und das Zwischenmantelrohr 32 aufgeschnitten und teilweise weggelassen. Figuren 3 und 4 zeigen denselben Querschnitt durch die Manteleinheit 3.

Erste Kugeln 7, die Wälzkörper bilden, sind in einem ersten Kugelkäfig 71 um ihre Kugelmittelpunkte K1 drehbar aufgenommen. Der Kugelkäfig 71 ist koaxial zwischen Außenmantelrohr 31 und Zwischenmantelrohr 32 eingesetzt. Die Kugeln 7 sind zwischen einer außen in das Zwischenmantelrohr 32 eingeformten, parallel zur Längsachse L langgestreckt nut- oder rinnenförmigen Laufbahn 34 und einer dieser radial gegenüberliegenden, ebenfalls nut- oder rinnenförmigen Laufbahn 35, die innen in dem Außenmantelrohr 31 ausgebildet ist, abrollbar angeordnet.

Zweite Kugeln 8, die Wälzkörper bilden, sind in einem zweiten Kugelkäfig 81 um ihre Kugelmittelpunkte K2 drehbar aufgenommen. Der Kugelkäfig 81 ist koaxial zwischen dem Zwischenmantelrohr 32 und dem Innenmantelrohr 33 eingesetzt. Die Kugeln 8 sind dabei zwischen einer außen in das Innenmantelrohr 33 eingeformten, parallel zur Längsachse L langgestreckt nut- oder rinnenförmigen Laufbahn 36 und einer dieser radial gegenüberliegenden, ebenfalls nut- oder rinnenförmigen Laufbahn 37, die innen in dem Zwischenmantelrohr 32 ausgebildet ist, abrollbar angeordnet.

Jeweils mehrere Kugeln 7, 8, in der Ansicht von Figur 2 sind drei sichtbar, sind in einer Reihe in Längsrichtung, d.h. in Richtung der Längsachse L angeordnet. Wie in den Querschnitten von Figuren 3 und 4 erkennbar, sind in dem gezeigten Beispiel insgesamt vier Reihen von Kugeln 7, 8 um die Längsachse L verteilt angeordnet.

Die Kugeln 7 und 8 sind im gezeigten Beispiel gleich groß mit einem Kugelradius k, also einem Kugeldurchmesser 2k.

Das Innenmantelrohr 33 und das Zwischenmantelrohr 32 haben einen achteckigen Querschnitt. Sie weisen jeweils rechteckig zueinander angeordnete, jeweils bezüglich der Längachse L einander paarweise parallel gegenüberliegende Verbindungsseiten 321 bzw. 331 auf. In den Eck- bzw. Kantenbereichen sind zwischen den Verbindungsseiten 321 bzw. 331 Laufbahnseiten 322 bzw. 332 angeordnet. Die Laufbahnseiten 332 weisen die Laufbahnen 36 auf, und die Laufbahnseiten 322 weisen die Laufbahnen 34 auf. Die Laufbahnseiten 322 bzw. 332 sind jeweils gegen die angrenzenden Verbindungsseiten 321 bzw. 331 geneigt, im gezeigten Beispiel in einer symmetrischen Anordnung um etwa 45° abgewinkelt. Die Laufbahnen 36 sind außen in die Laufbahnseiten 332 in das Innenmantelrohr 33 eingeformt, die Laufbahnen 34 außen in die Laufbahnseiten 322 des Zwischenmantelrohrs 32. Die Laufbahnseiten 322 des Zwischenmantelrohrs 32 weisen innen die Laufbahnen 37 auf, die mit den Laufbahnen 36 korrespondieren und einen Laufbahnquerschnitt begrenzen, in dem die Kugeln 8 aufgenommen sind.

Bevorzugt ist eine Laufbahnseite 322 des Zwischenmantelrohrs 32 parallel zu einer Laufbahnseite 332 des Innenmantelrohrs 33.

Das Außenmantelrohr 31 hat einen viereckigen Querschnitt, der vier rechtwinklig angeordnete Verbindungsseiten 311 aufweist, die in den Eck- bzw. Kantenbereichen miteinander verbunden sind. Innen in den Kantenbereichen befinden sich die Laufbahnen 35, die einen abgerundeten, rinnenförmigen Querschnitt haben.

In Figur 3 ist gestrichelt ein Hüllkreis 90 eingezeichnet, der das Innenmantelrohr 33 umschließt und die Eckbereiche zwischen den Verbindungsseiten 331 und den Laufbahnseiten 332 tangiert. Der Hüllkreis 90 hat einen Hüllkreisradius h.

Der erfindungsgemäße kreisringförmige Optimalbereich um besagten Hüllkreis 90 wird begrenzt durch eine innere kreisförmige Grenze 91 mit dem Radius (h-k), wobei k der Kugelradius ist, und eine äußere kreisförmige Grenze 92 mit dem Radius (h+k). Die inneren und äu-βere kreisförmigen Grenzen 91, 92 sind bevorzugt konzentrisch zu dem Hüllkreis 90. Mit anderen Worten fallen die Mittelpunkte des Hüllkreises 90, der inneren und äußeren Grenze 91, 92 zusammen und liegen auf der Längsachse L.

Erfindungsgemäß befinden sich die Kugelmittelpunkte K2 der Kugeln 8 innerhalb des Optimalbereichs. Im gezeigten Beispiel sind sie dabei um einen Abstand a radial nach außen von dem Hüllkreis 90 beabstandet, wobei der Abstand a kleiner gleich dem Kugelradius k ist.

In Figur 4 ist gestrichelt ein Hüllkreis 93 eingezeichnet, der das Zwischenmantelrohr 32 umschließt und die Eckbereiche zwischen den Verbindungsseiten 321 und den Laufbahnseiten 322 tangiert. Der Hüllkreis 93 hat einen Hüllkreisradius H.

Der erfindungsgemäße kreisringförmige Optimalbereich um besagten Hüllkreis 93 wird begrenzt durch einen inneren Kreis 94 mit dem Radius (H-k), wobei k der Kugelradius der Kugel 7 ist, und einem äußeren Kreis 95 mit dem Radius (H+k).

Erfindungsgemäß befinden sich die Kugelmittelpunkte K1 der Kugeln 7 innerhalb des Optimalbereichs. Im gezeigten Beispiel sind sie dabei um einen Abstand b radial nach außen von dem Hüllkreis 93 beabstandet, der kleiner gleich dem Kugelradius k ist.

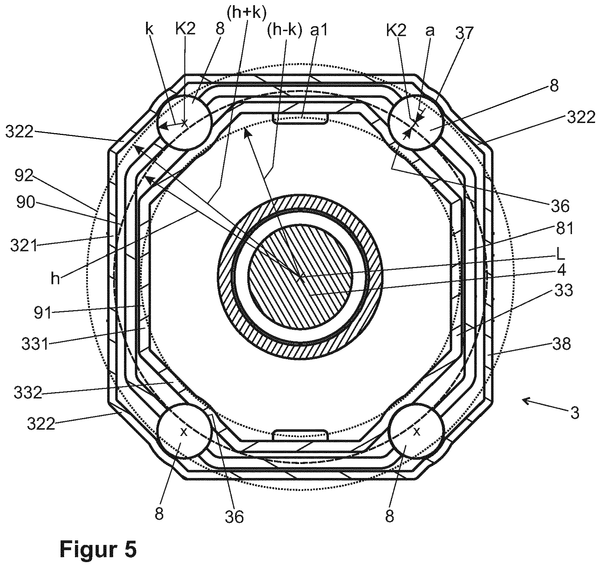

In Figur 5 ist eine Manteleinheit 3 dargestellt, welche nur ein Innenmantelrohr 33 und ein Außenmantelrohr 38 umfasst. Das Außenmantelrohr 38 ist ähnlich aufgebaut wie das Zwischenmantelrohr 32 der ersten Ausführung gemäß Figuren 3 und 4, und mit denselben Bezugszeichen versehen, weist aber im Unterschied dazu außen keine Laufbahnen auf. Auch dabei sind die Kugeln 8 wie oben beschrieben in einem Optimalbereich um den das Innenmantelrohr 33 umschreibenden Hüllkreis 90 angeordnet.

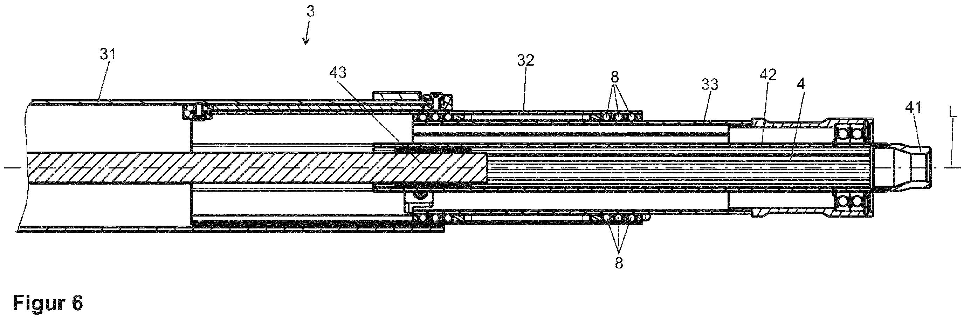

Aus dem in Figur 6 gezeigten Längsschnitt entlang der Längsachse L ist entnehmbar, dass die Lenkspindel 4 ist ebenfalls teleskopierbar ausgebildet, mit einer in eine Außenwelle 42 formschlüssig eingreifenden, in Längsrichtung teleskopierbaren Innenwelle 43, wobei dazwischen eine gleit- oder wälzgelagerten, drehmomentschlüssige Linearlagerung eingesetzt sein können.

Der Abstand der Kugelmittelpunkte K1 und K2 zueinander ist kleiner oder gleich dem doppelten Kugeldurchmesser (2k), also dem vierfachen Kugelradius k.

### Bezugszeichenliste

- 1: Lenksäule
- 2: Stelleinheit
- 3: Manteleinheit
- 31, 38: Außenmantelrohr
- 32: Zwischenmantelrohr
- 321: Verbindungsseite
- 322: Laufbahnseite
- 33: Innenmantelrohr
- 331: Verbindungsseite
- 332: Laufbahnseite
- 34, 35: Laufbahnen
- 36, 37: Laufbahnen
- 4: Lenkspindel
- 41: Anschlussabschnitt
- 42: Außenwelle
- 43: Innenwelle
- 5: Trageinheit
- 51: Befestigungsmittel
- 6: Verstellantrieb
- 61: Spindelmutter
- 62: Gewindespindel
- 63: Motor
- 7,8: Kugeln
- 71, 81: Kugelkäfig
- 90, 93: Hüllkreis
- 91, 92: Grenze
- 94, 95: Grenze

- K1, K2: Kugelmittelpunkt
- k: Kugelradius
- L: Längsachse
- H, h: Radius
- a: Abstand
- b: Abstand

## Patentansprüche

1. Lenksäule (1) für ein Kraftfahrzeug, umfassend eine Manteleinheit (3), in der eine Lenkspindel (4) um eine in Längsrichtung verlaufende Längsachse (L) drehbar gelagert ist und die mindestens zwei in Längsrichtung relativ zueinander verstellbar geführte Mantelrohre (31, 32, 33) mit mehreckigem Querschnitt aufweist, wobei zwischen den Mantelrohren (31, 32, 33) einen Wälzkörperradius (k) aufweisende Wälzkörper (7, 8) in Laufbahnen (34, 35, 36, 37) einer Wälzkörperführung in Längsrichtung abrollbar angeordnet sind, wobei
mindestens drei Laufbahnen (34, 35, 36, 37) über den Umfang verteilt angeordnet sind,
**dadurch gekennzeichnet,**
**dass** die Mittelpunkte (K1, K2) der radial außen auf einem Mantelrohr (32, 33) abrollbaren Wälzkörper (7, 8) einen radialen Abstand (a, b) kleiner oder gleich dem Wälzkörperradius (k) zu einem Hüllkreis (90, 93) haben, der das Mantelrohr (32, 33), auf dem die Wälzkörper außen abrollbar sind, umschreibt.

2. Lenksäule nach Anspruch 1, **dadurch gekennzeichnet, dass** die Mittelpunkte (K1, K2) außerhalb des Hüllkreises (90, 93) liegen.

3. Lenksäule nach einem der vorangehenden Ansprüche, **dadurch gekennzeichnet, dass** der mehreckige Querschnitt relativ zueinander abgewinkelte Verbindungsseiten (321, 331) aufweist, wobei eine Laufbahn (34, 36) zwischen zwei Verbindungsseiten (321, 331) angeordnet sind.

4. Lenksäule nach Anspruch 3, **dadurch gekennzeichnet, dass** mindestens eine der Laufbahnen (34, 36) auf einer Laufbahnseite (322, 332) angeordnet ist, die abgewinkelt zwischen Verbindungsseiten (321, 331) angeordnet ist.

5. Lenksäule nach einem Anspruch 3 oder 4, **dadurch gekennzeichnet, dass** die Verbindungsseiten (321, 331) und/oder die Laufbahnseiten (322, 332) eben ausgebildet sind.

6. Lenksäule nach einem der vorangehenden Ansprüche, **dadurch gekennzeichnet, dass** die Mittelpunkte (K1, K2) von in benachbarten Laufbahnen (34, 35, 36, 37) angeordneten Wälzkörpern (7, 8) senkrecht zur Längsachse (L) einen Querabstand von mindestens dem vierfachen Wälzkörperradius (k) haben.

7. Lenksäule nach einem der vorangehenden Ansprüche, **dadurch gekennzeichnet, dass** eine Mehrzahl von Wälzkörpern (7, 8) um ihren Mittelpunkt (K1, K2) drehbar in einem Wälzkörperkäfig (71, 81) gehalten ist.

8. Lenksäule nach einem der vorangehenden Ansprüche, **dadurch gekennzeichnet, dass** die Manteleinheit (3) mindestens drei Mantelrohre (31, 32, 33) aufweist, die mindestens ein Außen-, Zwischen- und Innenmantelrohr umfassen, mit mindestens einem in dem Außenmantelrohr (31) angeordneten Zwischenmantelrohr (32), in dem das Innenmantelrohr (33) oder ein weiteres Zwischenmantelrohr (32) angeordnet ist, wobei auf mindestens einem Zwischenmantelrohr (32) und dem Innenmantelrohr (33) Wälzkörper (7, 8) außen abrollbar sind.

9. Lenksäule nach Anspruch 8, **dadurch gekennzeichnet, dass** ein auf einem ersten Mantelrohr (32) angeordneter erster Wälzkörper (7) von einem auf einem zweiten Mantelrohr (33) angeordneten zweiten Wälzkörper (8) einen Mittenabstand hat, der kleiner oder gleich einem vierfachen Wälzkörperradius (k) des größten Wälzkörpers (7, 8) ist.

10. Lenksäule nach einem der vorangehenden Ansprüche, **dadurch gekennzeichnet, dass** eine Laufbahn (34, 35, 36, 37) als rinnenförmige Einformung ausgebildet ist.

11. Lenksäule nach einem der vorangehenden Ansprüche, **dadurch gekennzeichnet, dass** ein motorischer Verstellantrieb (6) mit den Mantelrohren (31, 32, 33) verbunden ist.

12. Verfahren zur Herstellung einer Lenksäule, umfassend eine Manteleinheit (3), in der eine Lenkspindel (4) um eine in Längsrichtung verlaufende Längsachse (L) drehbar gelagert ist und die mindestens zwei in Längsrichtung um einen vorgegebenen Verstellweg relativ zueinander verstellbar geführte Mantelrohre (31, 32, 33) aufweist, welche ein inneres Mantelrohr (33) und ein äußeres Mantelrohr (31, 38) umfassen, die radial einander gegenüberliegende Laufbahnen (34, 35, 36, 37) aufweisen, zwischen denen einen vorgegebenen Abrollquerschnitt aufweisende Wälzkörper (7, 8) in Längsrichtung abrollbar angeordnet sind, bei dem die zur relativen Verstellung der Mantelrohre (31, 32, 33) aufzuwendende Verstellkraft auf einen vorgegebenen Verstellkraft-Referenzwert eingestellt wird,
**gekennzeichnet durch die Schritte:**
A) Bereitstellen eines inneren Mantelrohrs (33, 32), das eine äußere Laufbahn (36, 34) aufweist, und eines äußeren Mantelrohrs (31, 32), das eine innere Laufbahn (35, 37) aufweist, wobei die innere Laufbahn (35, 37) und die äußere Laufbahn (36, 34) quer zur Längsachse (L) einen Laufbahnquerschnitt begrenzen,
B) Bereitstellen von Wälzkörpern (7, 8), deren Abrollquerschnitt größer ist als der Laufbahnquerschnitt,
C) Anordnen der Wälzkörper (7, 8) im Laufbahnquerschnitt,
D) Aufbringen einer axialen Verstellkraft zum relativen Bewegen der Mantelrohre (31, 32, 33) in Längsrichtung über den gesamten Verstellweg, wobei die Wälzkörper (7, 8) die Laufbahnen (34, 35, 36, 37) plastisch verformen, wobei die dabei ausgeübte Verstellkraft entlang des Verstellwegs gemessen wird,
E) Vergleichen der gemessenen Verstellkraft mit einem Verstellkraft-Referenzwert,
F1) Falls die gemessene Verstellkraft über den gesamten Verstellweg innerhalb vorgegebener Toleranzgrenzen mit dem Verstellkraft-Referenzwert übereinstimmt: Ende des Verfahrens.
F2) Falls die gemessene Verstellkraft größer ist als der Verstellkraft-Referenzwert: weiter mit Schritt D).

13. Verfahren nach Anspruch 12, **dadurch gekennzeichnet, dass** in Schritt D) eine relative Bewegung der Mantelrohre (31, 32, 33) in einer Vorwärtsrichtung und in einer dazu entgegengesetzten Rückwärtsrichtung jeweils über den gesamten Verstellweg erfolgt.

14. Verfahren nach Anspruch 13, **dadurch gekennzeichnet, dass** die in Vorwärtsrichtung gemessene Verstellkraft mit der in Rückwärtsrichtung gemessenen Verstellkraft verglichen wird, und Schritt D) so oft wiederholt wird, bis die gemessenen Verstellkräfte in Vorwärts- und Rückwärtsrichtung innerhalb vorgegebener Toleranzgrenzen übereinstimmen.

15. Verfahren nach einem der Ansprüche 12 bis 14, **dadurch gekennzeichnet, dass**, falls nach einer vorgegebenen Anzahl von Bewegungen die gemessene Verstellkraft außerhalb des Verstellkraft-Referenzwerts liegt, das Verfahren abgebrochen wird.

## Claims

1. Steering column (1) for a motor vehicle, comprising a jacket unit (3) in which a steering spindle (4) is mounted rotatably about a longitudinal axis (L) extending in the longitudinal direction and which has at least two jacket tubes (31, 32, 33) with a polygonal cross-section which are displaceably which are guided adjustably relative to one another in the longitudinal direction, wherein rolling elements (7, 8) having a rolling element radius (k) are arranged between the casing tubes (31, 32, 33) in raceways (34, 35, 36, 37) of a rolling element guide so as to roll in the longitudinal direction, wherein
at least three raceways (34, 35, 36, 37) are arranged distributed over the circumference
**characterized in that**
the center points (K1, K2) of the rolling elements (7, 8) which can be rolled radially on the outside of a casing tube (32, 33) have a radial distance (a, b) less than or equal to the rolling element radius (k) from an enveloping circle (90, 93) which circumscribes the casing tube (32, 33) on which the rolling elements can be rolled on the outside.

2. Steering column according to claim 1, **characterized in that** the center points (K1, K2) lie outside the enveloping circle (90, 93).

3. Steering column according to one of the preceding claims, **characterized in that** the polygonal cross-section has connecting sides (321, 331) which are angled relative to one another, a raceway (34, 36) being arranged between two connecting sides (321, 331).

4. Steering column according to claim 3, **characterized in that** at least one of the raceways (34, 36) is arranged on a raceway side (322, 332) which is arranged at an angle between connecting sides (321, 331).

5. Steering column according to claim 3 or 4, **characterized in that** the connecting sides (321, 331) and/or the track sides (322, 332) are flat.

6. Steering column according to one of the preceding claims, **characterized in that** the center points (K1, K2) of rolling elements (7, 8) arranged in adjacent raceways (34, 35, 36, 37) have a transverse spacing perpendicular to the longitudinal axis (L) of at least four times the rolling element radius (k).

7. Steering column according to one of the preceding claims, **characterized in that** a plurality of rolling elements (7, 8) is held rotatably about its center (K1, K2) in a rolling element cage (71, 81).

8. Steering column according to one of the preceding claims, **characterized in that** the jacket unit (3) has at least three jacket tubes (31, 32, 33) which comprise at least one outer, intermediate and inner jacket tube, with at least one intermediate jacket tube (32) which is arranged in the outer jacket tube (31) and in which the inner jacket tube (33) or a further intermediate jacket tube (32) is arranged, it being possible for rolling elements (7, 8) to be rolled externally on at least one intermediate jacket tube (32) and the inner jacket tube (33).

9. Steering column according to claim 8, **characterized in that** a first rolling element (7) arranged on a first casing tube (32) has a centre-to-centre distance from a second rolling element (8) arranged on a second casing tube (33) which is less than or equal to four times the rolling element radius (k) of the largest rolling element (7, 8).

10. Steering column according to one of the preceding claims, **characterized in that** a track (34, 35, 36, 37) is designed as a channel-shaped indentation.

11. Steering column according to one of the preceding claims, **characterized in that** a motorized adjustment drive (6) is connected to the casing tubes (31, 32, 33).

12. Method for producing a steering column, comprising a jacket unit (3) in which a steering spindle (4) is mounted rotatably about a longitudinal axis (L) extending in the longitudinal direction and which has at least two jacket tubes (31, 32, 33) which are guided adjustably relative to one another in the longitudinal direction by a predetermined adjustment path and which comprise an inner jacket tube (33) and an outer jacket tube (31, 38), which have radially opposite raceways (34, 35, 36, 37), between which rolling elements (7, 8) having a predetermined rolling cross-section are arranged to roll in the longitudinal direction, in which the adjusting force to be applied for relative adjustment of the casing tubes (31, 32, 33) is set to a predetermined adjusting force reference value,
**characterized by the steps:**
A) providing an inner casing tube (33, 32), which has an outer raceway (36, 34), and an outer casing tube (31, 32), which has an inner raceway (35, 37), the inner raceway (35, 37) and the outer raceway (36, 34) delimiting a raceway cross-section transversely to the longitudinal axis (L),
B) providing rolling elements (7, 8) whose rolling cross-section is larger than the raceway cross-section,
C) arranging the rolling elements (7, 8) in the raceway cross-section,
D) applying an axial adjustment force for relative movement of the casing tubes (31, 32, 33) in the longitudinal direction over the entire adjustment path, the rolling elements (7, 8) plastically deforming the raceways (34, 35, 36, 37), the adjustment force exerted in the process being measured along the adjustment path,
E) comparing the measured displacement force with a displacement force reference value,
F1) if the measured displacement force corresponds to the displacement force reference value over the entire displacement path within predetermined tolerance limits: End of the procedure.
F2) If the measured adjustment force is greater than the adjustment force reference value: continue with step D).

13. Method according to claim 12, **characterized in that** in step D) a relative movement of the casing tubes (31, 32, 33) takes place in a forward direction and in a reverse direction opposite thereto, in each case over the entire adjustment path.

14. Method according to claim 13, **characterized in that** the adjustment force measured in the forward direction is compared with the adjustment force measured in the reverse direction, and step D) is repeated until the measured adjustment forces in the forward and reverse directions match within predetermined tolerance limits.

15. Method according to one of claims 12 to 14, **characterized in that** if, after a predetermined number of movements, the measured adjustment force is outside the adjustment force reference value, the method is aborted.

## Revendications

1. Colonne de direction (1) pour un véhicule automobile, comprenant une unité d'enveloppe (3) dans laquelle un arbre de direction (4) est monté à rotation autour d'un axe longitudinal (L) s'étendant dans la direction longitudinale et qui comprend au moins deux tubes d'enveloppe (31, 32, 33) de section polygonale et qui présente au moins deux tubes d'enveloppe (31, 32, 33) guidés de manière à pouvoir être réglés l'un par rapport à l'autre dans le sens longitudinal, des corps de roulement (7, 8) présentant un rayon de corps de roulement (k) étant disposés entre les tubes d'enveloppe (31, 32, 33) dans des voies de roulement (34, 35, 36, 37) d'un guidage de corps de roulement de manière à pouvoir rouler dans la direction longitudinale, des corps de roulement (7, 8) étant disposés entre les tubes d'enveloppe (31, 32, 33) de manière à pouvoir rouler dans la direction longitudinale.
au moins trois chemins de roulement (34, 35, 36, 37) sont répartis sur la périphérie **caractérisé en**
**ce que** les points centraux (K1, K2) des corps de roulement (7, 8) pouvant rouler radialement à l'extérieur sur un tube d'enveloppe (32, 33) ont une distance radiale (a, b) inférieure ou égale au rayon (k) des corps de roulement par rapport à un cercle enveloppant (90, 93) qui circonscrit le tube d'enveloppe (32, 33) sur lequel les corps de roulement peuvent rouler à l'extérieur.

2. Colonne de direction selon la revendication 1, **caractérisée en ce que** les points centraux (K1, K2) sont situés à l'extérieur du cercle enveloppe (90, 93).

3. Colonne de direction selon l'une des revendications précédentes, **caractérisée en ce que** la section transversale polygonale présente des côtés de liaison (321, 331) coudés l'un par rapport à l'autre, un chemin de roulement (34, 36) étant disposé entre deux côtés de liaison (321, 331).

4. Colonne de direction selon la revendication 3, **caractérisée en ce qu'**au moins l'un des chemins de roulement (34, 36) est disposé sur un côté de chemin de roulement (322, 332) qui est disposé de manière coudée entre des côtés de liaison (321, 331).

5. Colonne de direction selon une revendication 3 ou 4, **caractérisée en ce que** les côtés de liaison (321, 331) et/ou les côtés de piste (322, 332) sont plats.

6. Colonne de direction selon l'une des revendications précédentes, **caractérisée en ce que** les centres (K1, K2) d'éléments de roulement (7, 8) disposés dans des chemins de roulement (34, 35, 36, 37) voisins présentent, perpendiculairement à l'axe longitudinal (L), une distance transversale d'au moins quatre fois le rayon (k) des éléments de roulement.

7. Colonne de direction selon l'une des revendications précédentes, **caractérisée en ce qu'**une pluralité d'éléments roulants (7, 8) sont maintenus dans une cage d'éléments roulants (71, 81) de manière à pouvoir tourner autour de leur centre (K1, K2).

8. Colonne de direction selon l'une des revendications précédentes, **caractérisée en ce que** l'unité d'enveloppe (3) présente au moins trois tubes d'enveloppe (31, 32, 33) qui comprennent au moins un tube d'enveloppe extérieur, un tube d'enveloppe intermédiaire et un tube d'enveloppe intérieur, avec au moins un tube d'enveloppe intermédiaire (32) disposé dans le tube d'enveloppe extérieur (31), dans lequel est disposé le tube d'enveloppe intérieur (33) ou un autre tube d'enveloppe intermédiaire (32), des corps de roulement (7, 8) pouvant être déroulés à l'extérieur sur au moins un tube d'enveloppe intermédiaire (32) et le tube d'enveloppe intérieur (33).

9. Colonne de direction selon la revendication 8, **caractérisée en ce qu'**un premier élément de roulement (7) disposé sur un premier tube d'enveloppe (32) est espacé d'un deuxième élément de roulement (8) disposé sur un deuxième tube d'enveloppe (33) par une distance centrale qui est inférieure ou égale à quatre fois le rayon (k) de l'élément de roulement le plus grand (7, 8).

10. Colonne de direction selon l'une des revendications précédentes, **caractérisée en ce qu'**une piste de roulement (34, 35, 36, 37) est réalisée sous la forme d'une empreinte en forme de gouttière.

11. Colonne de direction selon l'une des revendications précédentes, **caractérisée en ce qu'**un entraînement de réglage motorisé (6) est relié aux tubes d'enveloppe (31, 32, 33).

12. Procédé de fabrication d'une colonne de direction, comprenant une unité d'enveloppe (3) dans laquelle un arbre de direction (4) est logé de manière à pouvoir tourner autour d'un axe longitudinal (L) s'étendant dans le sens longitudinal et qui présente au moins deux tubes d'enveloppe (31, 32, 33) guidés de manière à pouvoir être réglés l'un par rapport à l'autre dans le sens longitudinal sur une course de réglage prédéfinie, lesquels présentent un tube d'enveloppe intérieur (33) et un tube d'enveloppe extérieur (31, 38), qui présentent des chemins de roulement (34, 35, 36, 37) radialement opposés l'un à l'autre, entre lesquels des corps de roulement (7, 8) présentant une section de roulement prédéfinie sont disposés de manière à pouvoir rouler dans la direction longitudinale, dans lequel la force de réglage à appliquer pour le réglage relatif des tubes d'enveloppe (31, 32, 33) est réglée sur une valeur de référence de force de réglage prédéfinie,
**caractérisé par les étapes suivantes** :
A) Préparation d'un tube d'enveloppe intérieur (33, 32), qui présente une voie de roulement extérieure (36, 34), et d'un tube d'enveloppe extérieur (31, 32), qui présente une voie de roulement intérieure (35, 37), la voie de roulement intérieure (35, 37) et la voie de roulement extérieure (36, 34) délimitant une section transversale de voie de roulement transversalement à l'axe longitudinal (L),
B) Mise à disposition d'éléments de roulement (7, 8) dont la section de roulement est supérieure à la section de la voie de roulement,
C) Disposer les corps roulants (7, 8) dans la section transversale de la piste de roulement,
D) application d'une force de réglage axiale pour le déplacement relatif des tubes d'enveloppe (31, 32, 33) dans la direction longitudinale sur toute la course de réglage, les corps de roulement (7, 8) déformant plastiquement les voies de roulement (34, 35, 36, 37), la force de réglage ainsi exercée étant mesurée le long de la course de réglage,
E) comparaison de la force de réglage mesurée avec une valeur de référence de la force de réglage,
F1) si la force de réglage mesurée coïncide avec la valeur de référence de la force de réglage sur toute la course de réglage dans des limites de tolérance prédéfinies : Fin de la procédure.
F2) Si la force de réglage mesurée est supérieure à la valeur de référence de la force de réglage : continuer avec l'étape D).

13. Procédé selon la revendication 12, **caractérisé en ce qu'**à l'étape D), un mouvement relatif des tubes d'enveloppe (31, 32, 33) est effectué dans une direction vers l'avant et dans une direction vers l'arrière opposée à celle-ci, respectivement sur toute la course de réglage.

14. Procédé selon la revendication 13, **caractérisé en ce que** la force de réglage mesurée dans la direction avant est comparée à la force de réglage mesurée dans la direction arrière, et l'étape D) est répétée autant de fois que nécessaire jusqu'à ce que les forces de réglage mesurées dans la direction avant et dans la direction arrière coïncident dans des limites de tolérance prédéterminées.

15. Procédé selon l'une des revendications 12 à 14, **caractérisé en ce que** si, après un nombre prédéterminé de mouvements, la force de réglage mesurée est en dehors de la valeur de référence de la force de réglage, le procédé est interrompu.
